# DEMANDE DE BREVET EUROPEEN

(11) **EP 1 927 805 A1**
(43) Date de publication de la demande: **04.06.2008**
(21) Numéro de dépôt: 07301553.9
(22) Date de dépôt: 16.11.2007
(51) Int. Cl.: F16L 23/00

(54) **Dispositif de protection sur brides de canalisations pour fonction brise jet**

(30) Priorité: 01.12.2006 FR 0655262
(71) Demandeur: Ades Technologies, 42100 Saint Etienne (FR)
(72) Inventeur: Modrin, Jean-Louis, 42260 Pommiers (FR); Gueton, Georges, 42100 Saint Etienne (FR)
(74) Mandataire: Dupuis, François

(57) **Abrégé**

Ce dispositif de protection sur brides ou demi brides de canalisations du type mettant en oeuvre un plan de joint entre les parties en regard des brides décalées ou non avec le plan de joint des raccord le dispositif étant du type comprenant une enveloppe extérieure (10) profilée en forme d'anneau (10c) susceptible d'entourer et recouvrir les parties de brides (1-2) ou demi-brides en obturant la sortie du plan de joint défini entre les brides ou demi-brides et les raccords (3-4) pour assurer une fonction brise-jet. Ladite enveloppe (10) est agencée et conformée directement avec des moyens d'ancrage et de retenue monobloc avec ladite forme en anneau (10c) disposés en prolongement latéral de ladite partie anneau (10c) pour coopérer avec les brides ou partie de brides ou organes de fixation des brides ou partie de brides.

## Description

L'invention se rattache au secteur technique des brides de liaison ou demi-brides pour canalisations utilisées notamment pour la distribution de fluides ou matières dangereuses à déflagrations.

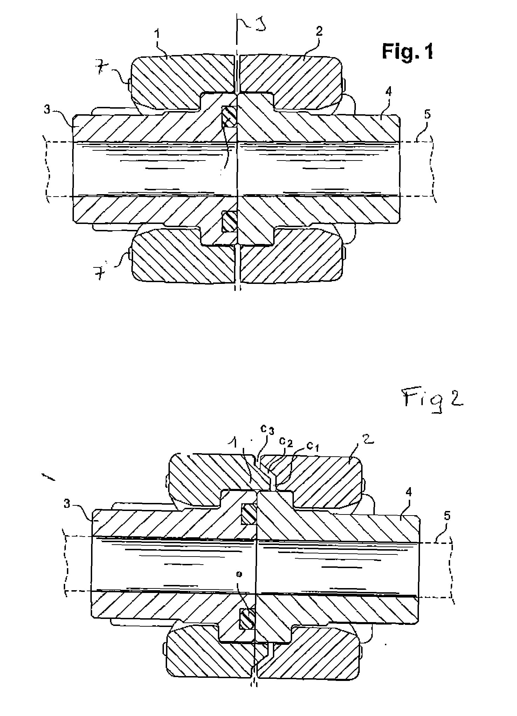

Le demandeur fabrique depuis de nombreuses années des ensembles de brides (1-2) ou demi brides de liaison s'adaptant sur des raccords (3-4) autour d'une canalisation (5). Une garniture d'étanchéité (6) est disposée sur le chant d'extrémité de l'un des raccords et vient en appui sur l'autre chant en extrémité de l'autre raccord selon un plan de joint vertical perpendiculaire à l'axe longitudinal de l'ensemble accouplé. La liaison des brides s'effectue à l'aide de boulonnages (7). On a ainsi représenté figure 1 une telle réalisation. Dans cette mise en oeuvre, la position des brides est telle qu'un espace est défini entre elles dans le prolongement du plan de joint. Cet ensemble ne prévoit pas de fonction brise jet et lorsqu'il y a une fuite d'étanchéité le liquide projeté, huile par exemple, est projeté avec toute la puissance nécessaire lors de l'ensemble constitué avec une pression maximum avec des risques conséquents.

Pour remédier à ce problème, le demandeur a développé un ensemble de raccordement avec bride de liaison ayant la fonction brise jet et décrit dans le brevet FR 2.861.161. En se référant à la figure 2 des dessins de la présente demande, on a représenté l'aménagement effectué consistant à réaliser, entre les brides, un canal avec une configuration irrégulière avec différents pans successifs (C1-C2-C3) permettant de « casser la pression » du fluide.

Cette situation est satisfaisante, répond au problème posé mais exige, à partir des ensembles existants sur la marché, lors des opérations de maintenance, un changement complet des brides, car les caractéristiques structurelles de celles-ci décrites dans le brevet FR 2.861.161 exigent un remplacement complet et non une adaptabilité.

En outre, les coûts de fabrication de ces brides ou demi-brides reste élevé.

On connaît, par ailleurs, par le brevet DE 3509391, une protection des brides par une enveloppe métallique susceptible de se positionner par rapport au plan de joint, mais sans contrôle du débattement.

La démarche du demandeur a donc été de rechercher une autre solution dans la conception d'un dispositif brise jet pour brides de canalisations qui puisse répondre à l'exigence technique de contrôle et réduction du jet et qui ainsi soit apte à s'adapter et se fixer sur les ensembles de brides standard actuellement sur le marché.

La solution trouvée et imaginée par le demandeur va à l'encontre de la pratique habituelle des fabricants de brides de liaison qui était orientée sur la conformation des brides elles-mêmes et non de leur environnement.

La solution retenue, selon l'invention, est simple, peu coûteuse, s'adapte à tous types de brides de liaison ou demi brides pour canalisations sur le marché sans modification des caractéristiques structurelles de ces brides.

Ainsi, selon l'invention, le dispositif de protection sur brides ou demi brides de canalisations du type mettant en oeuvre un plan de joint entre les parties en regard des brides décalées ou non avec le plan de joint des raccord est remarquable en ce qu'il comprend une enveloppe extérieure profilée en forme d'anneau susceptible d'entourer et recouvrir les parties de brides ou demi-brides en obturant la sortie du plan de joint défini entre les brides ou demi-brides et les raccords pour assurer une fonction brise-jet, ladite enveloppe étant agencée et conformée directement avec des moyens d'ancrage et de retenue monobloc avec ladite forme en anneau disposés en prolongement latéral de ladite partie anneau pour coopérer avec les brides ou partie de brides ou organes de fixation des brides ou partie de brides.

Ces caractéristiques et d'autres encore ressortiront bien de la suite de la description.

Pour fixer l'objet de l'invention illustrée de manière non limitative aux figures des dessins où :
- La figure 1 est une vue d'un ensemble de raccordements de canalisations avec brides de liaison sans fonction brise jet selon l'art antérieur.
- La figure 2 est une vue d'un ensemble de raccordements de canalisations avec brides de liaison avec fonction brise jet selon le brevet FR 2.861.161 du Demandeur au titre de l'art antérieur.
- La figure 3 est une vue en perspective avant montage du dispositif de protection selon l'invention dans une première mise en oeuvre de réalisation sur des brides de liaison.
- La figure 4 est une vue en perspective, selon la figure 3, du dispositif monté sur les brides.
- La figure 5 est une vue en perspective du dispositif de protection seul, conformément aux figures 3 et 4.
- La figure 6 est une vue en coupe, selon la ligne A.A. de la figure 4.
- La figure 7 est une vue en perspective d'une seconde variante du dispositif de protection.
- La figure 8 est une vue illustrant le montage du dispositif de la figure 7 sur l'ensemble brides de liaison avant mise en place définitive.
- La figure 9 est une vue selon la figure 8 après mise en place définitive.
- La figure 10 est une vue en coupe selon la ligne B.B de la figure 9.
- La figure 11 est une vue en perspective d'une troisième variante du dispositif de protection, et ce après mise en forme finale.
- La figure 12 est une vue montrant la fixation de la variante de la figure 11 sur l'ensemble brides.
- La figure 13 est une vue en coupe, selon la ligne C.C. de la figure 12.
- La figure 14 est une vue en perspective d'une quatrième variante du dispositif.
- La figure 15 est une vue partielle agrandie d'un détail (D1) du dispositif, selon la figure 14.
- La figure 16 est une vue en perspective éclatée illustrant le positionnement du dispositif de la figure 14 sur les brides et en particulier dans le plan de joint de celles-ci.
- La figure 17 est une vue en perspective d'une cinquième variante du dispositif avec l'utilisation d'un moyen de cerclage élastique.
- La figure 18 est une vue du dispositif, selon la figure 17, après montage du moyen de cerclage élastique.
- La figure 19 est une vue en perspective éclatée illustrant le positionnement du dispositif, selon la figure 17, sur les brides et en particulier dans le plan de joints de celles-ci.
- La figure 20 est une vue partielle agrandie d'un détail (D2) du montage du dispositif, selon la figure 19.

Afin de rendre plus concret l'objet de l'invention, on le décrit maintenant d'une manière non limitative aux figures des dessins.

Dans le cadre de la description, les références identiques ont été utilisées pour les parties connues selon l'art antérieur à savoir les ensembles de brides (1-2) ou demi brides, les raccords (3-4), la garniture d'étanchéité (6) disposée sur le chant d'extrémité de l'un des raccords et venant en appui sur l'autre chant en extrémité selon le plan de joint vertical perpendiculaire à l'axe longitudinal de l'ensemble accouplé. Les boulonnages sont ainsi référencés par (7) et le jeu existant entre les brides en regard est référencé par (J). La conformation de brides, et aussi des raccords, est bien connue et en elles-mêmes, celles-ci ne sont pas l'objet de l'invention.

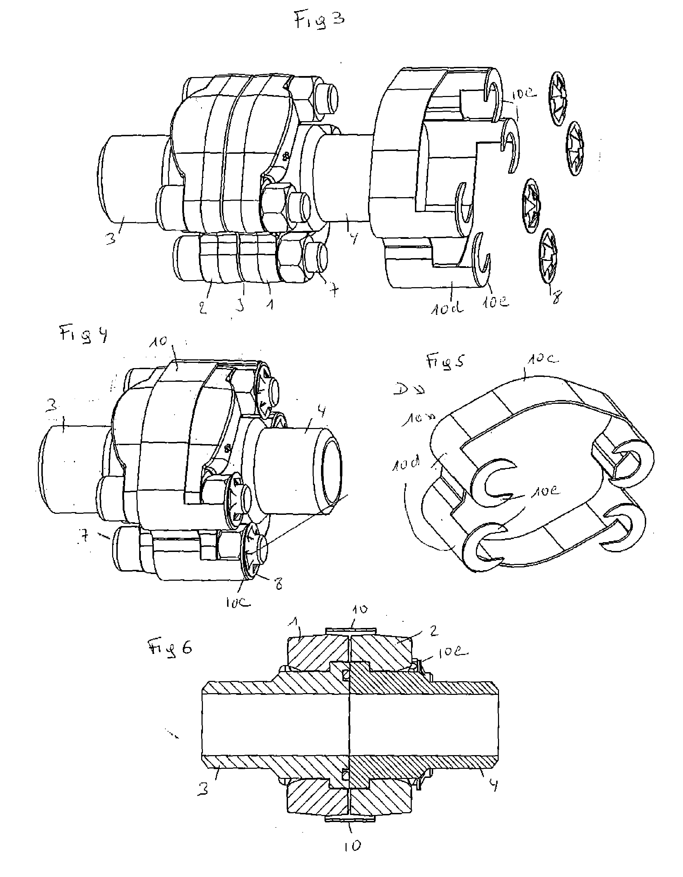

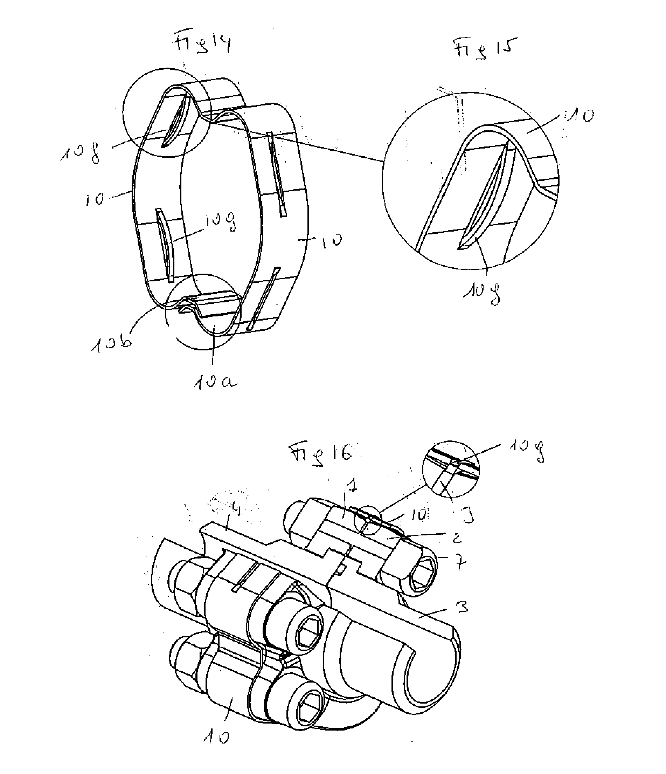

L'invention vise un dispositif de protection des brides ou demi-brides qui est référencé dans son ensemble par (D). Ce dispositif comprend une enveloppe extérieure profilée (10) en forme d'anneau qui est conformée pour correspondre au profil extérieur des brides ou demi brides après assemblage pour épouser, par l'extérieur, leurs formes et volumes. Ainsi, selon l'invention, ladite enveloppe extérieure est susceptible d'entourer et recouvrir les parties de brides ou demi-brides en obturant la sortie du plan de joint définit entre les brides ou demi-brides et les raccords pour assurer la fonction brise-jet. Selon l'invention, l'enveloppe extérieure est ainsi agencée et conformée directement avec des moyens assurant son positionnement et sa retenue en position par rapport aux brides ou demi-brides pour éviter tout débattement latéral et échappement. Ainsi qu'il apparaît aux figures des dessins, l'enveloppe extérieure a ainsi une forme avec un contour périphérique apte à s'adapter et se positionner autour des brides par emmanchement avec un léger jeu de montage pour faciliter celui-ci. L'enveloppe extérieure est réalisée par exemple en un matériau métallique en tôle inox ou autre matériau mis en forme avec, par exemple, des pliages successifs pour s'adapter à épouser étroitement par l'extérieur les brides ou demi-brides. Cette enveloppe extérieure peut être fermée c'est-à-dire sans extrémités libres, comme représenté par exemple figures 5, 7, 11, et ce par une opération de liaison par soudure et autre de ses parties d'extrémités après conformation. En variante, cette enveloppe peut être non fermée, comme représentée figure 16, les extrémités (10a-10b) étant conformées pour constituer une agrafe d'ancrage et de maintien. La partie principale de l'enveloppe (10) a ainsi la forme d'un anneau (10c) de configuration irrégulière pour épouser, par l'extérieur, les formes des brides ou demi-brides avec un enserrement autour de celles-ci.

L'enveloppe (10), selon l'invention, comprend des moyens de positionnement et d'ancrage par rapport aux brides pour éviter tout débattement latéral et échappement de l'enveloppe par rapport aux brides ou demi-brides. Ces moyens d'ancrage et de retenue sont conformés monobloc avec l'anneau et font partie intégrante de l'enveloppe qui est fabriquée, découpée, mise en forme avec les moyens précités, en étant soit fermée, soit ouverte.

Diverses mises en oeuvre de ces moyens ont ainsi été réalisées et il y a lieu de les décrire successivement en faisant référence aux figures des dessins.

Selon les figures 3, 4 et 5, les moyens d'ancrage sont établis en prolongement de la partie anneau (10c) par des languettes (10d) dans le même plan que la partie anneau, et des griffes rabattues (10e) qui sont susceptibles de se positionner autour des boulons (7) de serrage, des rondelles crantées (8) de liaison assurant l'ancrage sur le filetage desdits boulons et le positionnement de l'enveloppe (10), comme représenté figure 4.

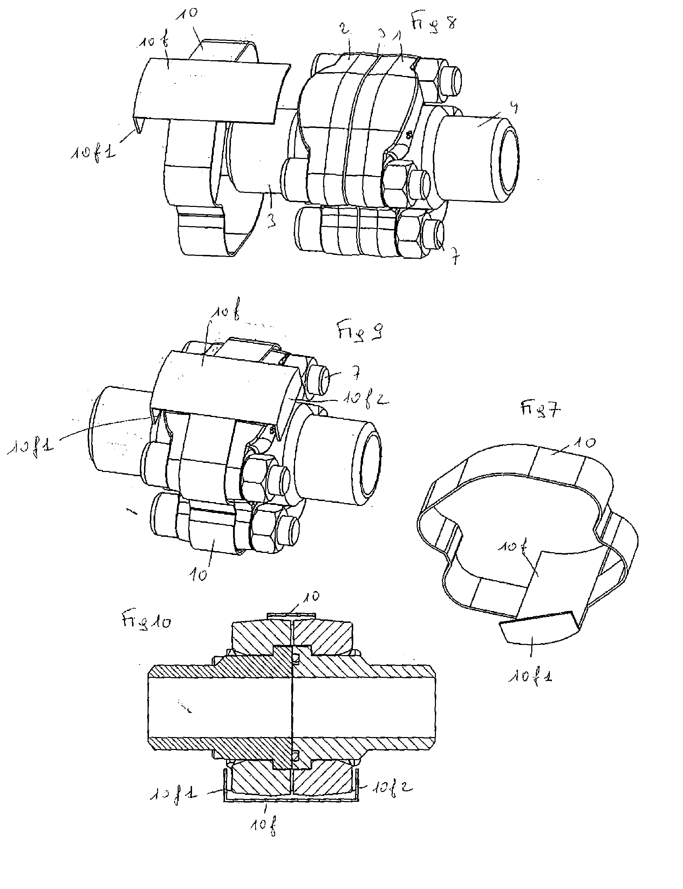

Selon la variante des figures 7 à 10, le moyen d'ancrage comprend essentiellement une languette (10f) établie dans le prolongement longitudinal de l'assemblage brides-raccords-canalisations et perpendiculairement à l'anneau. Cette languette déborde de part et d'autre de la largeur de l'anneau sur une distance correspondant à la largeur des brides accolées ou demi-brides accolées. La languette (10f) présente, à une extrémité, une patte pré repliée (10f1) lors de la fabrication, destinée à venir en appui contre le chant de la bride en regard (figures 7 et 8), l'autre extrémité (10f2) de la languette initialement en prolongement de la partie centrale de la languette, étant rabattue ensuite après montage contre l'autre face opposée en regard des brides ou demi brides. On a ainsi un contrôle du débattement latéral de chaque côté des brides ou demi brides.

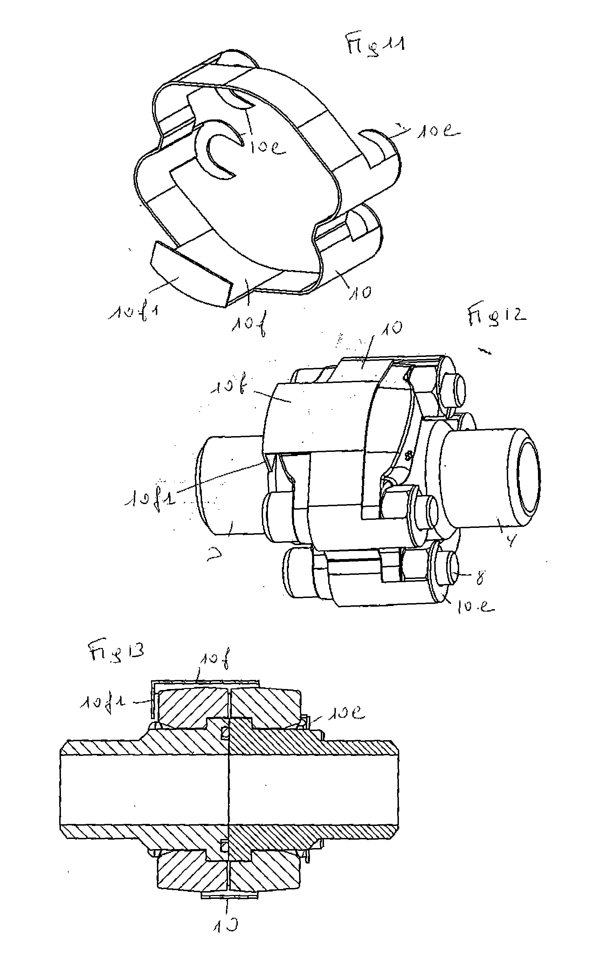

La variante illustrée aux figures 11, 12 et 13 est une combinaison des deux précédentes à l'exception du fait qu'il n'y a pas de seconde patte (10f2).

Dans le cas des figures 14, 15 et 16, c'est l'anneau constitutif de l'enveloppe qui présente, sur son pourtour, un certain nombre de bandes en saillie (1g) découpées dans la matière de l'enveloppe de sorte à faire appui sur les parties en regard des brides ou demi-brides. Ces bandes sont découpées dans l'épaisseur de l'anneau et peuvent présenter une configuration curviligne comme représenté à titre d'exemple figure 14, ou des configurations en bourrelets formant plan d'appui ou autre. Si les bandes sont méplates, elles viennent s'insérer dans le plan de joint (J) défini entre les brides ou demi brides en évitant ainsi tout débattement et enlèvement de l'enveloppe sauf à prévoir une action de dégagement des bandes dans le logement considéré par l'action d'un opérateur.

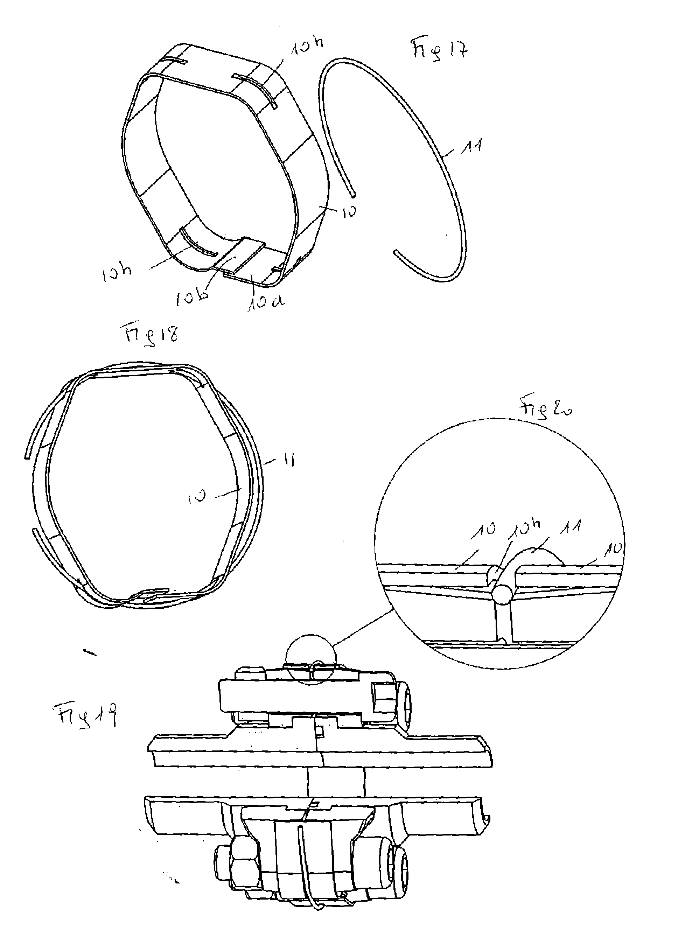

Dans la variante des figures 17 à 20, l'enveloppe en forme d'anneau présente, sur son pourtour (10h), permettant le passage d'un cerclage métallique (11) fendu ayant une capacité élastique de déformation. Ce cerclage pénètre dans les fentes (10h) précitées et permet la tenue de l'enveloppe de par son élasticité. Ce cerclage vient ainsi s'insérer en l'espace (J) précité entre les brides de sorte à maintenir l'enveloppe et éviter son détachement.

La solution apportée par l'invention est simple, pratique à mettre en oeuvre, peu coûteuse. La fabrication s'effectue, par exemple, en tôlerie avec des opérations classiques de découpage, pliage et, le cas échéant, emboutissage. L'enveloppe s'adapte sur tout profil de brides ou demi brides et, de part son positionnement, assure la fonction brise jet. Cette enveloppe s'adapte sur tous ensembles existants sans nécessiter de démontage de ces derniers.

## Revendications

1. Dispositif de protection sur brides ou demi brides de canalisations du type mettant en oeuvre un plan de joint entre les parties en regard des brides décalées ou non avec le plan de joint des raccord du type comprenant une enveloppe extérieure (10) profilée en forme d'anneau (10c) susceptible d'entourer et recouvrir les parties de brides (1-2) ou demi-brides en obturant la sortie du plan de joint défini entre les brides ou demi-brides et les raccords (3-4) pour assurer une fonction brise-jet,
**caractérisé en ce que** ladite enveloppe (10) est agencée et conformée directement avec des moyens d'ancrage et de retenue monobloc avec ladite forme en anneau (10c) disposés en prolongement latéral de ladite partie anneau (10c) pour coopérer avec les brides ou partie de brides ou organes de fixation des brides ou partie de brides.

2. Dispositif, selon la revendication 1, **caractérisé en ce que** la partie principale de l'enveloppe (10) a la forme d'un anneau (10c) de configuration irrégulière pour épouser, par l'extérieur, les formes des brides ou demi brides avec un enserrement autour de celles-ci.

3. Dispositif, selon la revendication 1, **caractérisé en ce que** les moyens d'ancrage sont établis en prolongement de la partie anneau (10c) par des languettes (10d) dans le même plan que la partie anneau, et des griffes rabattues (10e) qui sont susceptibles de se positionner autour des boulons (7) de serrage, des rondelles crantées (8) de liaison assurant l'ancrage sur le filetage desdits boulons et le positionnement de l'enveloppe (10).

4. Dispositif, selon la revendication 3, **caractérisé en ce que** le moyen d'ancrage comprend une languette (10f) établie dans le prolongement longitudinal de l'assemblage brides-raccords-canalisations et perpendiculairement à l'anneau,
et **en ce que** cette languette déborde de part et d'autre de la largeur de l'anneau sur une distance correspondant à la largeur des brides accolées ou demi brides accolées,
et **en ce que** la languette (10f) présente, à une extrémité, une patte pré repliée (10f1) lors de la fabrication, destinée à venir en appui contre le chant de la bride en regard, l'autre extrémité (10f2) de la languette initialement en prolongement de la partie centrale de la languette, étant rabattue ensuite après montage contre l'autre face opposée en regard des brides ou demi brides.

5. Dispositif, selon la revendication 1, **caractérisé en ce que** les moyens d'ancrage sont établis en prolongement de la partie anneau (10c) par des languettes (10d) dans le même plan que la partie anneau, et des griffes rabattues (10e) qui sont susceptibles de se positionner autour des boulons (7) de serrage, des rondelles crantées (8) de liaison assurant l'ancrage sur le filetage desdits boulons et le positionnement de l'enveloppe (10),
et **en ce que** le moyen d'ancrage comprend une languette (10f) établie dans le prolongement longitudinal de l'assemblage brides-raccords-canalisations et perpendiculairement à l'anneau,
et **en ce que** cette languette déborde de part et d'autre de la largeur de l'anneau sur une distance correspondant à la largeur des brides accolées ou demi brides accolées,
et **en ce que** la languette (10f) présente, à une extrémité, une patte pré repliée (10f1) lors de la fabrication, destinée à venir en appui contre le chant de la bride en regard.

6. Dispositif, selon la revendication 1, **caractérisé en ce que** l'enveloppe en forme d'anneau présente, sur son pourtour (10h), permettant le passage d'un cerclage métallique (11) fendu ayant une capacité élastique de déformation,
et **en ce que** le cerclage pénètre dans les fentes (10h) précitées et permet la tenue de l'enveloppe de par son élasticité, et vient ainsi s'insérer en l'espace (J) précité entre les brides de sorte à maintenir l'enveloppe et éviter son détachement.
